# FASCICULE DE BREVET EUROPEEN

(11) **EP 0 898 448 B1**
(45) Date de publication et mention de la délivrance du brevet: **15.05.2002**
(21) Numéro de dépôt: 97907155.2
(22) Date de dépôt: 03.03.1997
(51) Int. Cl.: A01K 5/00, A01F 25/20

(54) **MACHINE AUTOCHARGEUSE, MELANGEUSE, DISTRIBUTRICE DE DIVERSES MATIERES**
AUFNAHME,MISCH,UNDVERTEILMASCHINE FUR FUTTER
SELF-LOADING, MIXING AND DISPENSING MACHINE FOR A VARIETY OF MAT ERIALS

(30) Priorité: 05.03.1996 FR 9602728
(43) Date de publication de la demande: 03.03.1999
(73) Titulaire: Bel, Dominique, 81700 Puylaurens (FR)
(72) Inventeur: Bel, Dominique, 81700 Puylaurens (FR)
(74) Mandataire: Vander-Heym, Serge
(86) Numéro de dépôt international: FR9700365
(87) Numéro de publication internationale: WO9732467

(56) Documents cités:
- EP-A- 0 110 110
- DE-A- 3 206 391
- DE-A- 3 423 791
- DE-A- 3 703 750
- DE-A- 4 101 638
- FR-A- 2 593 020

## Description

La présente invention est relative à une machine pour le mélange et la distribution de diverses matières et, notamment pour l'alimentation des animaux.

L'état de la technique en la matière est illustré par le brevet français publié sous le numéro 2400333.

Dans ce document il est décrit une remorque comportant une cuve tournant autour d'un axe, ouverte à une extrémité pour permettre l'introduction et la sortie des aliments et comportant intérieurement des rampes héliocoïdales. Une telle machine se comporte, en fait, comme une bétonnière.

Dans la demande de brevet européen, publié sous le numéro 276645, il est décrit une machine analogue qui différe, toutefois, de la présente par le fait que les aliments sont introduits à une extrémité et déversés par l'autre.

Ces machines conviennent pour le mélange et la distribution d'aliments qui sont stockés dans des silos, c'est le cas des granulés, mais ne conviennent pas lorsqu'une partie des aliments est constituée par du fourrage. En effet, le fourrage est ensilé sur des aires de stockage et se présente sous la forme d'une masse compacte. Pour prélever de la matière, l'utilisation d'une désileuse est donc nécessaire.

La machine de l'invention, qui remédie à ces inconvénients permet de réaliser le désilage, le mélange et la distribution.

De la façon connue, la machine comporte un chassis sur lequel repose une cuve, pourvue de rampes hélicoïdales internes, pouvant pivoter autour de son axe longitudinal et elle est remarquable en ce qu'elle présente à l'une, ouverte, de ses extrémités des moyens pour désagréger la matière ensilée et la faire pénétrer dans la dite cuve.

Selon une autre caractéristique de l'invention, des moyens sont prévus pour déplacer l'axe de la cuve dans un plan vertical de façon à la maintenir inclinée.

Le châssis de la machine présente un timon pouvant être accroché à la barre de relevage d'un tracteur agricole, des moyens étant prévus pour permettre le déplacement de la cuve indépendamment du véhicule tracteur tant axialement que latéralement.

La présente invention sera mieux comprise par la description qui va suivre faite en se référant aux dessins annexés à titre d'exemple indicatif, seulement, sur lesquels
- la figure 1 est une vue schématique montrant la machine en élévation ;
- la figure 2 est une vue analogue à la figure 1 montrant la possibilité d'incliner l'axe de la cuve ;

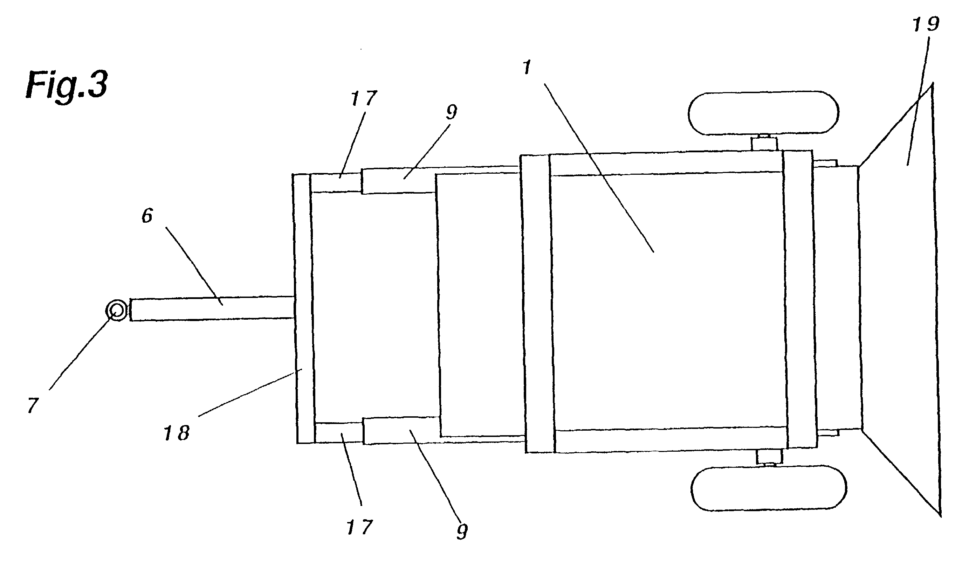

- la figure 3 est la vue de dessus de la figure 1 ;
- la figure 4 est une vue en coupe effectuée selon la ligne IV-IV de la figure 1;
- la figure 5 est une vue en coupe effectuée selon la ligne V-V de la figure 1 ;
- la figure 6 est la vue de droite de la figure 1, limitée à la cuve ;
- la figure 7 est une vue de dessus à plus petite échelle montrant la possibilité de déplacer la cuve latéralement et axialement ;
- les figures 8 à 13, sont des vues très schématiques montrant l'utilisation de la machine.

En ce reportant au dessin, on voit que la machine se compose d'une cuve cylindrique 1, d'un châssis 2 et d'un essieu 3 pourvu de roues 4.

Selon un mode de réalisation, le chassis 2 se compose d'une cage 5 et d'un timon 6 un oeil 7 permettant d'atteler l'ensemble à la barre de relevage d'un tracteur agricole (non représenté).

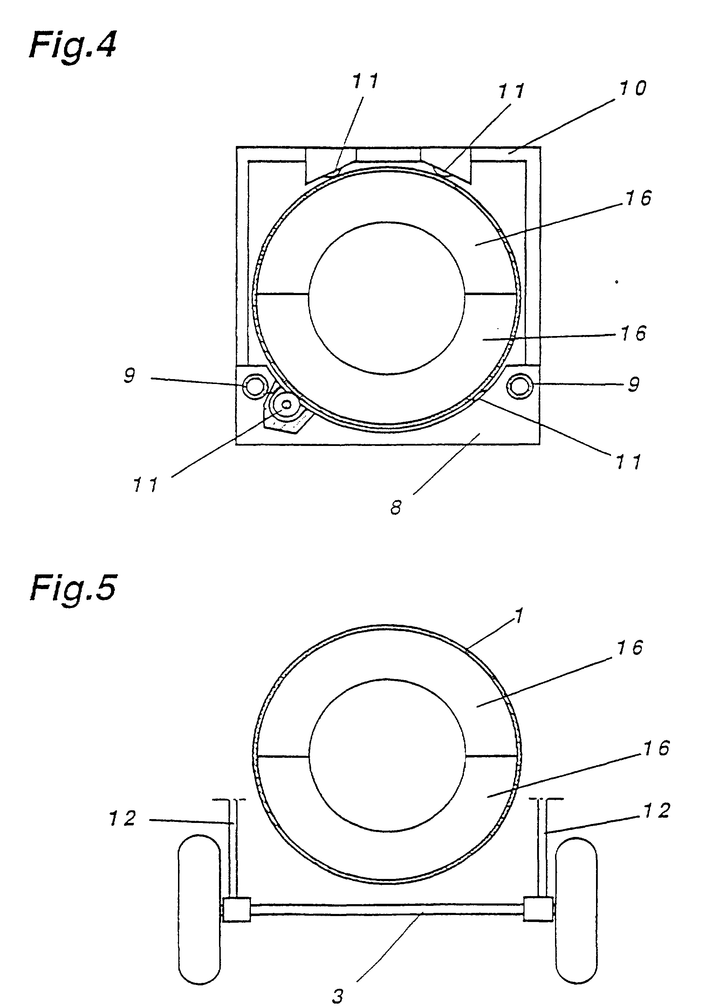

Comme cela ressort à la figure 4, la cage 5 comporte deux berceaux 8, reliés par des longerons 9, surmontés, chacun, par un arceau 10 de façon à emprisonner la cuve 1. Des galets 11 assurent le maintien de la cuve 1. Des moyens sont prévus pour assurer l'immobilisation axiale de la cuve 1. Ainsi, par exemple, la cuve 1 peut présenter une rainure externe, réalisée par un fer en U cintré, dans laquelle pénétrent partiellement les galets 11 correspondants. Cette dernière disposition n'est pas représentée.

L'entraînement en rotation de la cuve ne pose pas de problèmes. Ainsi,il est possible de prévoir, sur le prolongement de l'arbre de l'un des galets, un pignon denté en prise avec une couronne dentée extérieure rendue solidaire de la cuve. Le pignon denté précité peut être entrainé par un moteur hydraulique. Naturellement, des moyens analogues peuvent être utilisés.

Le châssis 2 est relié à l'essieu 3 par deux bras 12. Chaque bras est articulé sur l'essieu par l'une de ses extrémités et sur le montant 10a de l'arceau par son autre extrémité.

Un vérin 13 relie le bras 12 et la cage 5.

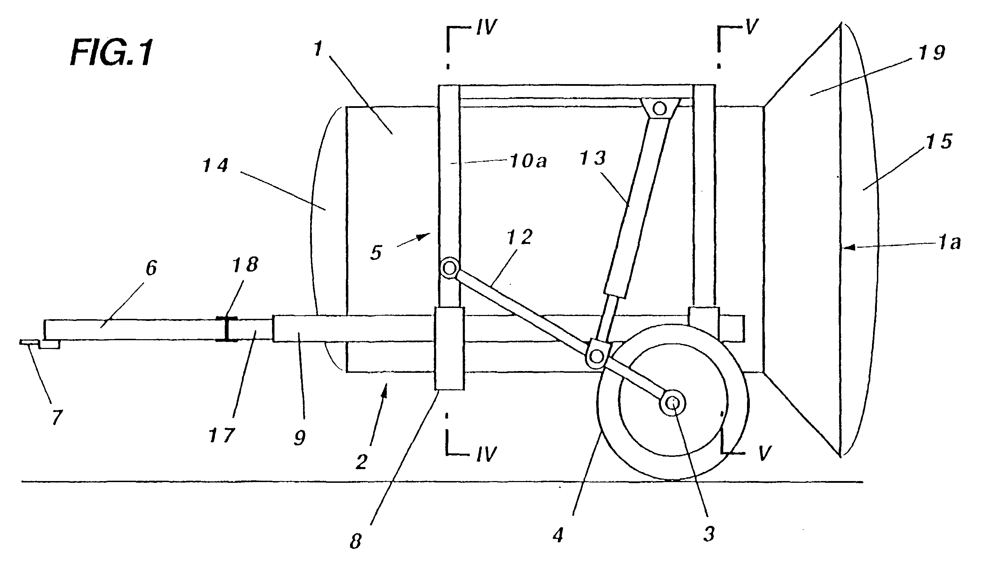

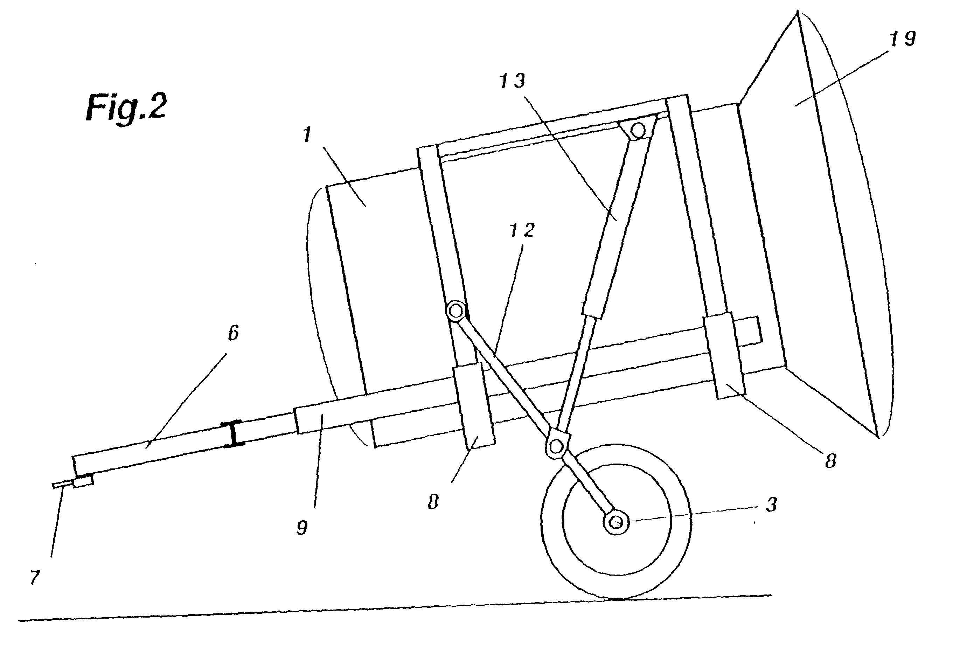

Lorsque la machine est attelée derrière un tracteur, l'extension du vérin 13 provoque la rotation des bras 12 ce qui a pour effet d'incliner la cuve qui, par exemple, de la position représentée sur la figure 1 vient occuper la position représentée sur la figure 2. Durant ce mouvement le tracteur est fixe et l'oeil 7 constitue un point fixe pour la machine.

La cuve 1 est ouverte à chacune de ses extrémités, mais celles ci peuvent être obturées par des couvercles 14 et 15 de différentes formes suivant leurs utilisations.

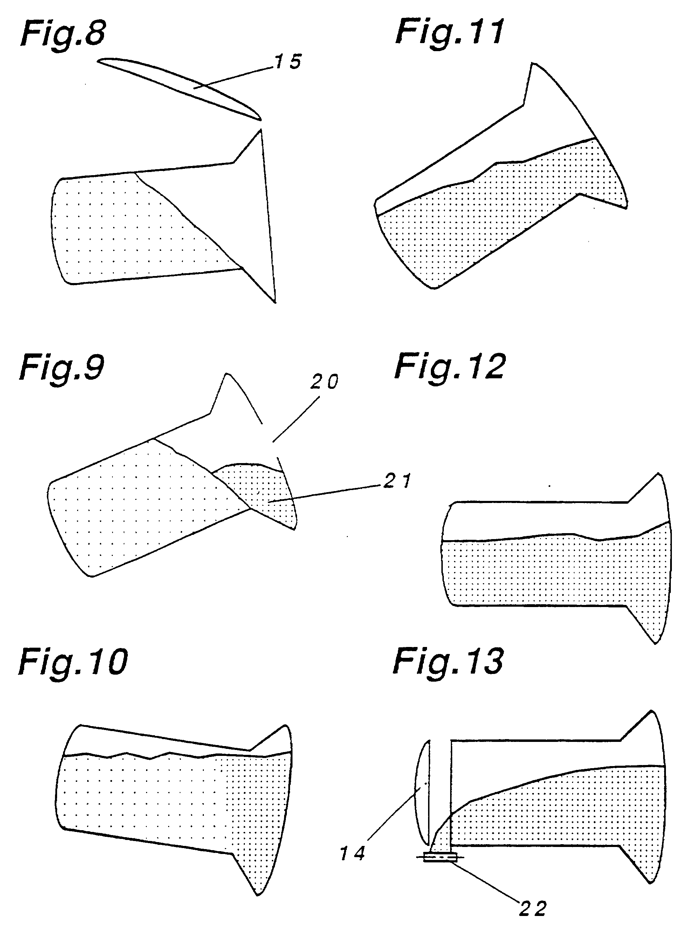

Les couvercles 14 et 15 peuvent être mis en place et otés manuellement et être totalement indépendants de la machine. Selon un mode de réalisation plus évolué, non représenté, chaque couvercle peut être relié au châssis par un système de biellettes articulées commandées par des vérins de façon à placer les couvercles de la position représentée sur la figure 1 à celle réprésentée soit sur la figure 8 soit sur celle 13.

Pour d'autres utilisations, portes enlevées, deux dents longues et effilées ou autres supports fixés au centre de la bande spiralée 1b, formant un axe de rotation, permettront un vissage ou un dévissage de différentes matières du fait de la rotation de la cuve.

Selon une caractéristique importante de l'invention, l'extrémité arrière la de la cuve présente une bande spiralée rigide 1b présentant sur son champ externe des dents (non représentées). La forme des dents dépend de la matière à désagréger, il est toutefois fait observer que certaines dents peuvent être repliées, vers le centre de la cuve, pour favoriser le refoulement de la matière vers cette dernière.

Lorsque la partie arrière de la machine est appliquée contre une masse de matière ensilée et que la cuve tourne, la bande dentée précitée agit à l'instar d'un trépan et désagrège la matière ensilée qui pénètre ainsi dans la cuve. L'introduction de la matière est favorisée par la présence à l'intérieur de la cuve de rampes hélicoïdales 16, deux par exemple. Selon un mode de réalisation, chaque rampe s'enroule sur environ deux tours.

Pour pénétrer dans le produit ensilé, on peut faire reculer la machine à l'aide du véhicule tracteur. Il est toutefois préférable de réaliser le désilage tout en laissant le tracteur immobile.

Selon l'invention ce résultat est obtenu en réalisant le châssis en deux parties dont l'une peut coulisser par rapport à l'autre. Ainsi, chaque longeron 9 est tubulaire et recuit une tige 17. Les deux tiges 17 sont réunies par une traverse 18 reliée au timon 6. Selon un mode de réalisation, l'un des longerons 9 constitue le corps d'un vérin hydraulique et la tige 17 correspondante forme la tige de piston dudit vérin. Dans la pratique, le coulissement est obtenu à l'aide d'un vérin (non représenté) s'étendant parallèlement à l'axe du longeron correspondant et dont une extrémité est rendue solidaire dudit longeron tandis que l'autre est rendue solidaire de la tige correspondante.

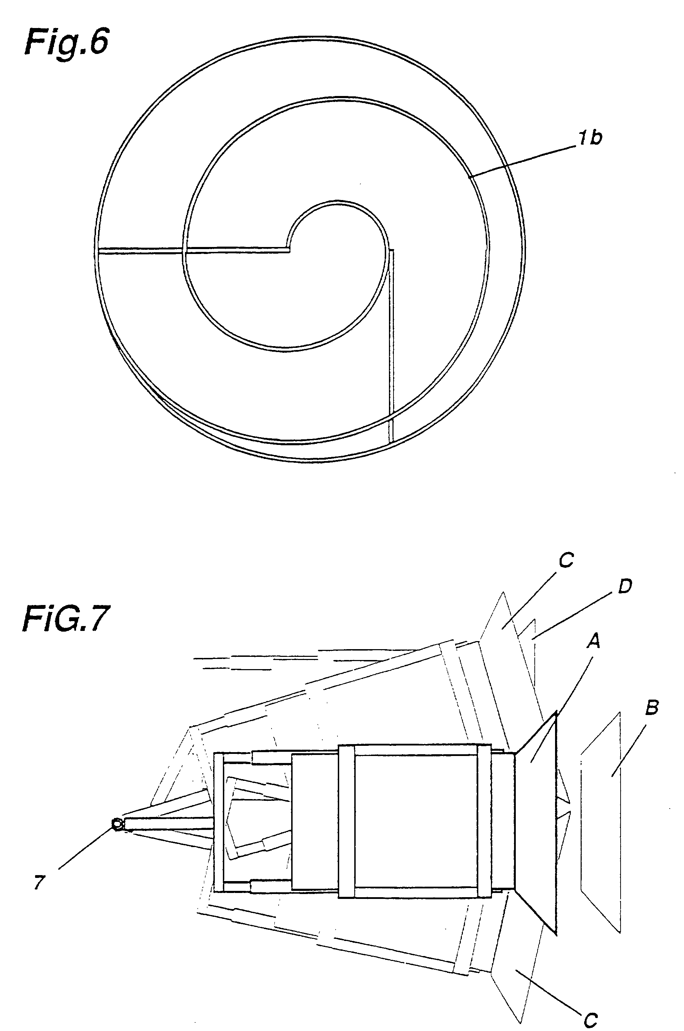

Comme cela ressort de la figure 7, il est possible, par l'extension du vérin 9-17, et sans déplacer le tracteur, d'amener la cuve 1 de la position A à celle B.

Selon une autre caractéristique de l'invention, l'extrémité arrière de la cuve 1 présente une partie tronconique 19 dont le petit diamètre se raccorde à ladite cuve.

En rétractant le vérin 13, la partie 19 prend appui sur le sol par son grand diamètre alors que les roues 4 sont soulevées. A ce moment, si on fait tourner la cuve celle ci roule sur le sol et l'ensemble pivote latéralement. II est ainsi possible, comme cela res sort de la figure 7, d'amener la machine de la position A à l'une ou l'autre des positions C selon le sens de rotation de la cuve.

Lorsque la machine est dans la position C, la face arrière de celle-ci est disposée en oblique par rapport à la position A. Selon une caractéristique de l'invention des moyens sont prévus pour redresser la machine à partir de la position C. A cet effet, le timon 6 est articulé sur la traverse 18 selon un axe sensiblement vertical. De cette façon, il est possible d'amener la machine de la position C à celle D soit en faisant reculer le tracteur soit en remplacant le timon par un vérin (non représenté). Le timon 6, ou son équivalent le vérin précité, peut être articulé sur la traverse 18 selon un axe sensiblement horizontal.

Naturellement, les possibilités de déplacement de la machine qui sont montrées sur la figure 7 sont utilisées en combinaison avec la possibilité d'incliner la cuve dans le plans vertical. De cette façon, il est possible sans déplacer le véhicule tracteur, de désiler une masse de matière dont les dimensions sont très importantes.

La figure 8 montre la cuve à la fin du remplissage. A partir de cette position, on incline la machine vers l'avant puis on place le couvercle 15 et, par l'ouverture centrale 20 de ce dernier, on introduit une certaine masse 21 d'un additif alimentaire ou autre qu'il convient de mélanger aux produits déjà présents dans la cuve (figure 9).

Après avoir obturé l'ouverture 20, on incline la cuve vers l'arrière (fig. 10). Cette manoeuvre est obtenue en soulevant, à l'aide de la barre de relevage du tracteur,l'oeil 7, ce qui a pour effet de faire pivoter l'ensemble cuve-châssis autour de l'axe de l'essieu 3. Dans cette position, on fait tourner la cuve dans le sens selon lequel les rampes 16 font progresser le produit vers l'arrière.

Ensuite, on fait pivoter la cuve en sens inverse pour l'amener dans la position de la figure 11. Dans cette position les produits situés dans la partie arrière de la cuve ont tendance à s'écrouler et à se déplacer vers l'avant. Ce mouvement naturel est contrarié par l'inversion du sens de rotation de la cuve qui tend à déplacer la masse vers l'arrière. De cette façon, un mélange simple et efficace est réalisé.

Lorsque le mélange est achevé, on arrête la cuve, on la place dans la position de déchargement (fig 12), on ouvre le couvercle 14 puis on fait tourner la cuve dans le sens qui provoque le déplace ment du mélange vers l'avant. Le produit est alors distribué par l'entremise d'un petit tapis sans fin transversal 22 solidaire du châssis.

Pour d'autres utilisations, le couvercle 14 pourra être équipé d'une ouverture obturable, permettant d'insufler de l'air sec pour la dessication de matières internes à la cuve. Sur la porte 15, l'orifice 20 sera muni d'une grille permettant l'évacuation de l'air.

## Revendications

1. Machine pour le mélange et la distribution de diverses matières et notamment d'aliments du genre de celles comportant une cuve cylindrique présentant intérieurement des rampes hélicoïdales et pouvant pivoter autour de son axe longitudinal, **caractérisées en ce que** la partie arrière (1a) de la cuve (1) est obturé par un couvercle (15) amovible pour démasquer des dents susceptibles , lors de la rotation de ladite cuve, de désagréger un produit ensilé, des moyens étant prévus pour faire pénétrer la cuve dans ladite matière sans devoir déplacer le véhicule tracteur derrière lequel la machine est attelée.

2. Machine selon la revendication 1, **caractérisée en ce que** l'axe de la cuve, peut être incliné sur un plan vertical.

3. Machine selon l'une quelconque des revendications 1 et 2, **caractérisée en ce que** la cuve est portée par un châssis extensible de sorte qu'il est possible de déplacer la cuve sans déplacer le véhicule tracteur.

4. Machine selon l'une quelconque des revendications 1 à 3, **caractérisée en ce que** la rotation de la cuve est utilisée pour déplacer latéralement la machine et éventuellement visser ou dévisser diverses matières.

5. Machine selon l'une quelconque des revendications 1 à 4, **caractérisée en ce que** la cuve est portée par une cage (5) constituant une partie du châssis (2) de la machine qui repose sur un essieu (3) à roues (4) par l'entremise de deux bras (12), chacun desdits bras étant articulé par l'une de ses extrémités sur l'essieu (3) et, par l'autre, sur ladite cage, chaque bras étant, en outre, relié à la cage par un vérin (13) permettant de fixer l'angle d'inclinaison dudit bras et, par suite, celui de l'axe longitudinal de la cuve (1).

6. Machine selon l'une quelconque des revendications 1 à 5, **caractérisée en ce que** l'extrémité arrière de la cuve (1) se termine par une partie tronconique (19) se raccordant par son petit diamètre à ladite cuve et susceptible de prendre appui sur le sol lors de la rétraction du vérin (13).

7. Machine selon l'une quelconque des revendications 1 à 6, **caractérisée en ce que** la cage de support de la cuve présente deux longerons (9) tubulaires dans chacun desquels peut coulisser une tige (17), les deux tiges précitées étant réunies au timon (6) du châssis par l'entremise d'une traverse (18).

8. Machine selon la revendication (7), **caractérisée en ce que** le longeron (9) et la tige (17) sont constitués par un vérin usuel.

9. Machine selon l'une quelconque des revendications 1 à 8, **caractérisée en ce que** l'extrémité avant de la cuve (1) est ouverte et est normalement obturée par un couvercle amovible (14), les couvercles amovibles (14) et (15) comportent des ouvertures également obturables de différentes formes (20 par exemple) pour différentes fonctions.

10. Machine selon l'une quelconque des revendications 7 à 9, **caractérisée en ce que** le timon (6) est articulé sur la traverse (18) selon un axe contenu dans un plan sensiblement horizontal et selon un axe contenu dans un plan sensiblement vertical.

## Patentansprüche

1. Maschine zum Mischen und zur Verteilung verschiedener Stoffe und insbesondere von Lebensmitteln von der Art, umfassend einen zylindrischen Bottich, der innen spiralförmige Rampen aufweist und um seine Längsachse schwenken kann, **dadurch gekennzeichnet, daß** der hintere Teil (1a) des Bottichs (1) durch einen abnehmbaren Deckel (15) verschlossen werden kann, um Zähne freizugeben, die geeignet sind, beim Drehen besagten Bottichs ein siliertes Produkt aufzulockern, wobei Mittel vorgesehen sind, um den Bottich in besagten Stoff eindringen zu lassen, ohne das Zugfahrzeug zu versetzen, hinter dem die Maschine eingespannt ist.

2. Maschine gemäß Anspruch 1, **dadurch gekennzeichnet, daß** besagter Bottich auf eine vertikale Ebene geneigt werden kann.

3. Maschine gemäß Anspruch 1 oder 2, **dadurch gekennzeichnet, daß** der Bottich durch ein ausfahrbares Gehäuse derart getragen wird, daß es möglich ist, den Bottich ohne Versetzen des Zugfahrzeugs zu versetzen.

4. Maschine gemäß Anspruch 1 bis 3, **dadurch gekennzeichnet, daß** die Drehung des Bottichs genutzt wird, um die Maschine seitlich zu versetzen und eventuell verschiedene Materialien auf- oder abzuschrauben.

5. Maschine gemäß Anspruch 1 bis 4, **dadurch gekennzeichnet, daß** der Bottich von einem Käfig (5) getragen wird, der einen Teil des Gehäuses (2) der Maschine bildet, die über zwei Arme (12) auf einer Achse (3) mit Rädern (4) ruht, wobei jeder der besagten Arme durch eines seiner Enden auf der Achse (3) artikuliert ist und jeder Arm durch das andere auf besagtem Käfig darüber hinaus mit dem Käfig über einen Zylinder (13) verbunden ist, der es erlaubt, den Neigungswinkel besagten Arms und anschließend den der Längsachse des Bottichs (1) festzulegen.

6. Maschine gemäß Anspruch 1 bis 5, **dadurch gekennzeichnet, daß** das hintere Ende des Bottichs (1) in einem kegelstumpfartigen Teil (19) endet, das über seinen kleinen Durchmesser an besagtem Bottich angeschlossen und geeignet ist, sich beim Zurückziehen des Zylinders (13) aufzustützen.

7. Maschine gemäß Anspruch 1 bis 6, **dadurch gekennzeichnet, daß** der Stützkäfig des Bottichs zwei röhrenförmige Längsträger (9) aufweist, in denen jeweils ein Stift (17) gleiten kann, wobei die zwei vorgenannten Stifte über eine Querleiste (18) mit der Deichsel (6) des Gehäuses verbunden sind.

8. Maschine gemäß Anspruch 7, **dadurch gekennzeichnet, daß** der Längsträger (9) und der Stift (17) durch einen handelsüblichen Zylinder gebildet werden.

9. Maschine gemäß Anspruch 1 bis 8, **dadurch gekennzeichnet, daß** das vordere Ende des Bottichs (1) offen und normalerweise durch einen abnehmbaren Deckel (14) geschlossen ist, wobei die abnehmbaren Deckel (14) und (15) ebenfalls verschließbare Öffnungen verschiedener Formen (zum Beispiel 20) für verschiedene Funktionen enthalten.

10. Maschine gemäß Anspruch 7 bis 9, **dadurch gekennzeichnet, daß** die Deichsel (6) auf der Querleiste (18) gemäß einer Achse artikuliert ist, die in einer deutlich horizontalen Eben enthalten ist und gemäß einer Achse, die in einer deutlich vertikalen Ebene enthalten ist.

## Claims

1. Machine for mixing and distributing various substances and in particular food and of the type comprising a cylindrical tank with internal helical ramps and able to pivot around its longitudinal axis, **characterised in that** the rear portion (1a) of the tank (1) is sealed off by a cover (15) able to be removed so as to exhibit teeth capable of breaking up a product placed in a silo when said tank rotates, means being provided to make the tank penetrate said substance without having to move the traction engine behind which the machine is tied.

2. Machine according to claim 1, **characterised in that** the axis of the tank may be slanted on a vertical plane.

3. Machine according to claim 1 or 2, **characterised in that** the tank is borne by an extensible frame so that it is possible to move the tank without having to move the traction engine.

4. Machine according to one of claims 1 to 3, **characterised in that** rotation of the tank is used to move the machine sideways and possibly screw or unscrew various substances.

5. Machine according to one of claims 1 to 4, **characterised in that** the tank is borne by a cage (5) constituting one portion of the frame (2) of the machine which rests upon an axle (3) with wheels (4) by means of two arms (12), each of said arms being joined via one of its extremities onto the axle (3) and by the other onto said cage, each arm being moreover connected to the cage by a jack (13) making it possible to fix first the angle of inclination of said arm and afterwards that of the longitudinal axis of the tank (1)

6. Machine according to one of claims 1 to 5, **characterised in that** the rear extremity of the tank (1) ends by the truncated portion (19) connected via its small diameter to said tank and able to rest on the ground during retraction of the jack (13).

7. Machine according to one of claims 1 to 6, **characterised in that** the support cage of the tank has two tubular longitudinal girders (9) in each of which a rod (17) is able to slide, the two said rods being joined to the drawbar (6) of the frame by means of a crosspiece (18).

8. Machine according to claim (7), **characterised in that** the longitudinal girder (9) and rod (17) are constituted by an ordinary jack.

9. Machine according to one of claims 1 to 8, **characterised in that** the front extremity of the tank (1) is open and is normally sealed off by a moveable cover (14), the moveable covers (14) and (15) comprising openings, also able to be sealed off and having various shapes (20 for example) for various functions.

10. Machine according to one of claims 7 to 9, **characterised in that** the drawbar (6) is joined onto a crosspiece (18) along an axis contained in an approximately horizontal plane and along an axis contained in an approximately vertical plane.
